# EUROPÄISCHE PATENTANMELDUNG

(11) **EP 0 969 439 A2**
(43) Veröffentlichungstag der Anmeldung: **05.01.2000**
(21) Anmeldenummer: 99111950.4
(22) Anmeldetag: 23.06.1999
(51) Int. Cl.: G09B 9/40

(54) **Piloten-Trainingssystem**

(30) Priorität: 01.07.1998 DE 19829340
(71) Anmelder: Bodenseewerk Gerätetechnik GmbH, 88662 Überlingen (DE)
(72) Erfinder: Krogmann, Uwe, Dr., 88662 Überlingen (DE)
(74) Vertreter: Weisse, Jürgen, Dipl.-Phys.

(57) **Zusammenfassung**

Ein Piloten-Trainingssystem zum Trainieren der Erfassung von Zielen (14) durch Radar in einem Trainingsflugzeug (10), bei welchem das Trainingsflugzeug (10) Navigationsmittel zur Bestimmung der Lage und Position des Trainingsflugzeugs (10) sowie Mittel zur Datenübermittlung enthält, wird, um die Notwendigkeit der Installation eines realen Radargerätes in ein Trainingsflugzeug zu vermeiden, so ausgestaltet, daß ein im Training verwendetes Ziel (14) mit positionsbestimmenden Mitteln und Mitteln zur Datenübemittlung der von den positionsbestimmenden Mitteln gelieferten Position an das Trainingsflugzeug (10) aufweist, das Trainingsflugzeug (10) Radar-Simulationsmittel (18,24) aufweist, welche von den Daten der Navigationsmittel des Trainingsflugzeugs (10) und den Daten der positionsbestimmenden Mittel des Ziels (14) beaufschlagt sind, welche aus den Daten der Navigationsmittel des Trainingsflugzeugs (10) und den Daten der positionsbestimmenden Mittel den Abstand zwischen Trainingsflugzeug und Ziel sowie Azimut und Elevationswinkel des Ziels (14) bezogen auf das Trainingsflugzeug (14) berechnen und welche eine Darstellung liefern, die der Darstellung eines Radargerätes entspricht, welche ein reales Radargerät bei Erfassen des Ziels liefern würde.

## Beschreibung

### Technisches Gebiet

Die Erfindung betrifft ein Piloten-Trainingssystem zum Trainieren der Erfassung von Zielen durch Radar in einem Trainingsflugzeug, bei welchem das Trainingsflugzeug Navigationsmittel zur Bestimmung der Lage und Position des Trainingsflugzeugs sowie Mittel zur Datenübermittlung enthält.

### Stand der Technik

Moderne Kampfflugzeuge weisen ein Radargerät auf, durch welches andere Flugzeuge, Bodenziele u.ä. erfaßt werden können. Der Pilot muß den Umgang mit solchen Radargeräten trainieren. Zu diesem Zweck müssen Trainingsflugzeuge, auf denen der Pilot trainiert, mit solchen Radargeräten versehen werden. Diese Radargeräte sind aufwendig. Die Ausrüstung von Trainingsflugzeugen mit Radargeräten nur zu dem Zweck, den Piloten mit der Handhabung solcher Geräte vertraut zu machen, stellt einen unerwünschten Kostenaufwand dar.

Durch die US-A-4,424,038 ist ein Piloten-Trainingsgerät bekannt, mit welchem der Pilot Gegenmaßnahmen gegen feindliches Radar trainieren soll. Dabei wird in einem Simulator, der in das Flugzeug anstelle eines Radar-Warngerätes einsetzbar ist, ein Szenario von feindlichen Radareinwirkungen gespeichert, das an dem Simulator nach Maßgabe der Bewegungen des Flugzeugs abgespielt wird. Der Pilot. muß dann Gegenmaßnahmen gegen solche simulierten Radareinwirkungen ergreifen. Hier wird ein festes, beim Überfliegen eines Geländes auftretendes Szenario von feindlichen Radareinwirkungen simuliert. Es geht nicht um die Erfassung von Zielen durch ein bordeigenes Radargerät.

Die EP-B-0 399 418 beschreibt ein Verfahren zum Missionstraining von Fluggeräten, bei dem während des Fluges dem Piloten Gelände- und Fortbewegungsszenen auf einem Schirm simuliert werden. Ebenso simuliert werden Bedrohungen, Radar-Anzeigen oder Waffenauslösung. Es ist auch eine Datenfernübertragung zu einer Bodenstation oder zu anderen Flugzeugen vorgesehen. Die Bodenstation kann die bordeigene Navigationseinrichtung über die Datenfernübertragung von extern manipulieren. Durch die Datenfernübertragung zu anderen Flugzeugen wird das simulierte Szenario den anderen Flugzeugen übertragen. Die Einrichtungen dafür sind in einem Außenbehälter untergebracht. Auch bei diesem Verfahren wird dem Piloten ein fest gespeichertes Szenario simuliert.

Die EP-A-0 654 778 betrifft ein Piloten-Trainingsgerät, bei welchem in einem Außenlastbehälter (Pod) Mittel zur Erzeugung von Szenarien untergebracht sind, welche über einen Bildschirm in das Auge des Piloten einspiegelbar sind. Der Pod enthält weiterhin Mittel zur Bestimmung der Flugdaten und Mittel zur Aufzeichnung der Reaktion des Piloten.

### Offenbarung der Erfindung

Der Erfindung liegt die Aufgabe zugrunde, bei einem Piloten-Training zum Trainieren der Erfassung von Zielen durch Radar die Installation eines aufwendigen Radargeräts in dem Trainingsflugzeug zu vermeiden.

Erfindungsgemäß wird diese Aufgabe bei einen Piloten-Trainingssystem der eingangs genannten Art dadurch gelöst, daß
(a) ein im Training verwendetes Ziel mit positionsbestimmenden Mitteln und Mitteln zur Datenübermittlung der von den positionsbestimmenden Mitteln gelieferten Position an das Trainingsflugzeug aufweist,
(b) das Trainingsflugzeug Radar-Simulationsmittel aufweist,
   - welche von den Daten der Navigationsmittel des Trainingsflugzeugs und den Daten der positionsbestimmenden Mittel des Ziels beaufschlagt sind
   - welche aus den Daten der Navigationsmittel des Trainingsflugzeugs und den Daten der positionsbestimmenden Mittel den Abstand zwischen Trainingsflugzeug und Ziel sowie Azimut und Elevationswinkel des Ziels bezogen auf das Trainingsflugzeug berechnen und
   - welche eine Darstellung liefern, die der Darstellung eines Radargerätes entspricht, welche ein reales Radargerät bei Erfassen des Ziels liefern würde.

In das Trainingsflugzeug braucht kein Radargerät eingebaut zu werden. Vielmehr sind an dem Trainingsflugzeug Radar-Simulationsmittel vorgesehen, welche die von einem Radargerät gelieferte Darstellung eines Ziels simulieren. Das Ziel und die Radar-Darstellung sind aber nicht wie bei den bekannten Piloten-Trainingsgeräten in einem fest gespeicherten Szenario enthalten sondern werden durch ein reales Ziel, z.B. ein anderes Flugzeug, bestimmt. Dieses Ziel liefert lediglich über die Mittel zur Datenübermittlung seine Position und Lage, und daraus erzeugen die Radar-Simulationsmittel die Radar-Darstellung.

Ausgestaltungen der Erfindung sind Gegenstand der Unteransprüche.

Ein Ausführungsbeispiel der Erfindung ist nachstehend unterBezugnahme auf die zugehörigen Zeichnungen näher erläutert.

### Kurze Beschreibung der Zeichnungen

- Fig.1: ist eine schematische Darstellung eines Trainingsflugzeugs und eines Ziels in Form eines zweiten Flugzeugs.
- Fig.2: ist ein Blockdiagramm der Radar-Simulationsmittel.

### Bevorzugte Ausführung der Erfindung

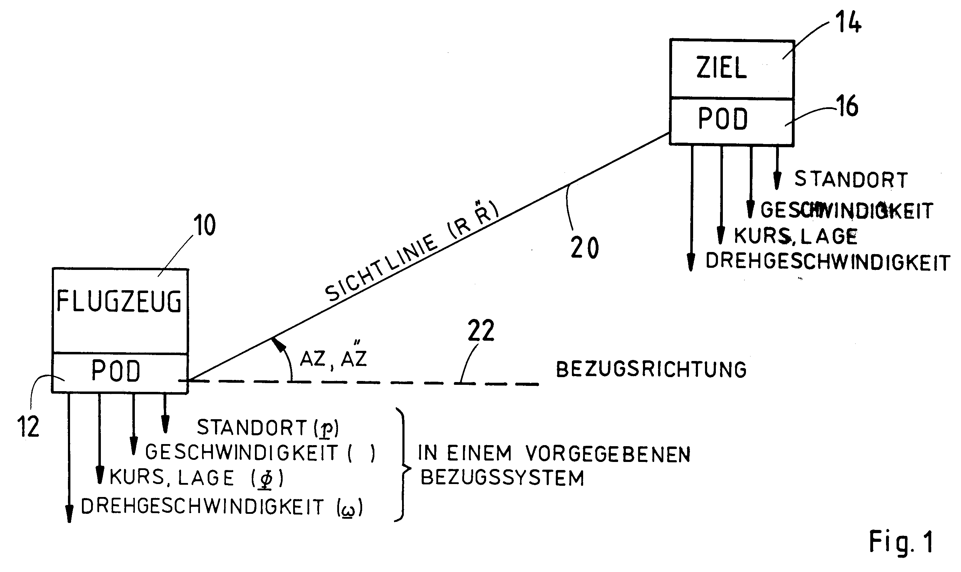

In Fig.1 ist mit 10 ein Trainingsflugzeug bezeichnet. Das Trainingsflugzeug 10 trägt einen Außenbehälter (Pod). In dem Außenbehälter 12 sind Navigationsmittel untergebracht, welche den Standort p des Trainingsflugzeugs 10, dessen Geschwindigkeit v, Kurs und Lage Φ des Trainingsflugzeugs 10 und die Drehgeschwindigkeit ω des Trainingsflugzeugs liefern.

Das Ziel ist ebenfalls ein Flugzeug, ein Ziel-Flugzeug 14. Das Ziel-Flugzeug 14 trägt ebenfalls einen Außenbehälter oder Pod 16. Der Außenbehälter 16 enthält positions- und lagebestimmende Mittel, welche den Standort, die Geschwindigkeit, Kurs und Lage und Drehgeschwindigkeit des Ziel-Flugzeugs liefert.

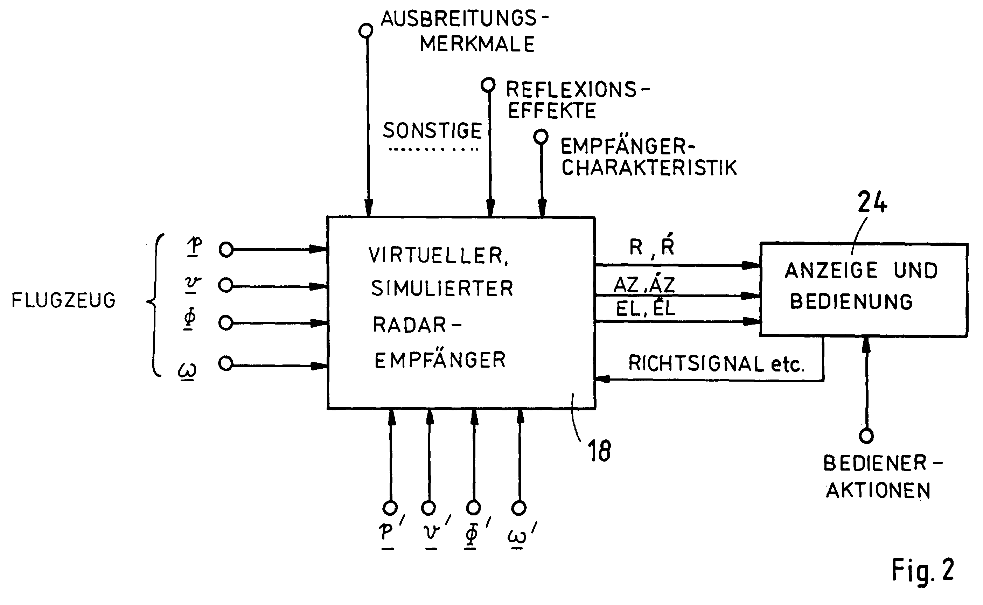

Die Daten p, v, φ und ω des Trainingsflugzeugs 10 und die entsprechenden Daten p', v', φ' und ω' des Ziel-Flugzeugs werden auf einen virtuellen, simulierten Radar-Empfänger 18 aufgeschaltet, wie in Fig.2 dargestellt ist. Der virtuelle, simulierte Radar-Empfänger 18 erhält weiterhin sonstige Daten, die Ausbreitungs-Merkmale, Reflexions-Effekte die Empfänger-Charakteristik usw. repräsentieren. Der virtuelle, simulierte Radar-Empfänger 18 verarbeitet diese Daten und liefert den Abstand R zum Ziel längs der Sichtlinie 20 gemessen sowie dessen Zeitableitung, den Azimutwinkel AZ der Sichtlinie 20 und dessen Zeitableitung und den Elevationswinkel EL und dessen Zeitableitung. Azimut- und Elevationswinkel sind dabei auf eine trainingsflugzeugfeste Bezugsrichtung 22 bezogen.

Die so erhaltenen Ausgangsdaten sind aufeine Anzeige- und Bedieneinheit 24 geschaltet. Die Anzeige- und Bedieneinheit 24 liefert eine Darstellung, wie sie ein reales Radargerät beim Erfassen des Zielflugzeugs liefern würde. Die Anzeige und Bedieneinheit gestattet es, ein "Richtsignal" oder dergl. nach Maßgabe von "Bedien-Aktionen" auf den virtuellen, simulierten Radar-Empfänger 18 aufzuschalten. Der virtuelle, simulierte Radar-Empfänger 18 reagiert mit seinen Ausgangssignalen in der gleichen Weise, wie ein realer Radar-Empfänger reagieren würde.

Die beiden Flugzeuge 10 und 14 können übereinstimmende Außenbehälter 12 bzw. 16 und Radar-Bediengeräte und Radar-Darstellunggeräte 24 aufweisen, so daß jedes der Flugzeuge 10 und 14 als Ziel für das jeweils andere Flugzeug 14 bzw. 10 dienen kann.

Die Mittel zur Datenübermittlung können zur Übermittlung von Daten der positionsbestimmenden Mittel von mehreren Zielen 14 eingerichtet sein. Durch die Radar-Simulationsmittel können dann mehrere Ziele gleichzeitig darstellbar sein.

## Patentansprüche

1. Piloten-Trainingssystem zum Trainieren der Erfassung von Zielen (14) durch Radar in einem Trainingsflugzeug (10), bei welchem das Trainingsflugzeug (10) Navigationsmittel zur Bestimmung der Lage und Position des Trainingsflugzeugs (10) sowie Mittel zur Datenübermittlung enthält, **dadurch gekennzeichnet, daß**
(a) ein im Training verwendetes Ziel (14) mit positionsbestimmenden Mitteln und Mitteln zur Datenübermittlung der von den positionsbestimmenden Mitteln gelieferten Position an das Trainingsflugzeug (10) aufweist,
(b) das Trainingsflugzeug (10) Radar-Simulationsmittel (18,24) aufweist,
- welche von den Daten der Navigationsmittel des Trainingsflugzeugs (10) und den Daten der positionsbestimmenden Mittel des Ziels (14) beaufschlagt sind
- welche aus den Daten der Navigationsmittel des Trainingsflugzeugs (10) und den Daten der positionsbestimmenden Mittel den Abstand zwischen Trainingsflugzeug und Ziel sowie Azimut und Elevationswinkel des Ziels (14) bezogen auf das Trainingsflugzeug (14) berechnen und
- welche eine Darstellung liefern, die der Darstellung eines Radargerätes entspricht, welche ein reales Radargerät bei Erfassen des Ziels liefern würde.

2. Piloten-Trainingssystem nach Anspruch 1, **dadurch gekennzeichnet, daß** das Trainingsflugzeug (10) die einem realen Radargerät entsprechenden Radar-Bediengeräte und Radar-Darstellunggeräte aufweist.

3. Piloten-Trainingssystem nach Anspruch 1 oder 2, **dadurch gekennzeichnet, daß**
(a) das Ziel ein zweites Flugzeug (Ziel-Flugzeug 14) ist,
(b) Trainingsflugzeug (10) und Ziel-Flugzeug (14) je einen Außenbehälter (12 bzw. 16) mit Navigationsmitteln und den Radar-Simulationsmitteln (18) bzw. den positionsbestimmenden Mitteln tragen.

4. Piloten-Trainingssystem nach Anspruch 3, **dadurch gekennzeichnet, daß** die beiden Flugzeuge (10,14) übereinstimmende Außenbehälter (12, 16) und Radar-Bediengeräte und Radar-Darstellunggeräte (24) aufweisen, so daß jedes der Flugzeuge als Ziel für das andere Flugzeug dienen kann.

5. Piloten-Trainingsgerät nach einem der Ansprüche 1 bis 4, **dadurch gekennzeichnet, daß**
(a) die Mittel zur Datenübermittlung zur Übermittlung von Daten der positionsbestimmenden Mittel von mehreren Zielen eingerichtet sind und
(b) durch die Radar-Simulationsmittel mehrere Ziele gleichzeitig darstellbar sind.
